# NEUE EUROPÄISCHE PATENTSCHRIFT

(11) **EP 2 919 090 B2**
(45) Veröffentlichungstag und Bekanntmachung des Hinweises auf die Entscheidung über den Einspruch: **20.04.2022**
(45) Hinweis auf die Patenterteilung: 11.07.2018
(21) Anmeldenummer: 15155521.6
(22) Anmeldetag: 18.02.2015
(51) Int. Cl.: G05G 5/05, B60K 26/02, G05G 5/03, G05G 1/30

(54) **Pedalkrafterzeugungsvorrichtung**
Pedal force creation device
Dispositif de génération de force de pédalage

(30) Priorität: 14.03.2014 DE 102014204724
(43) Veröffentlichungstag der Anmeldung: 16.09.2015
(73) Patentinhaber: Schaeffler Technologies AG & Co. KG, 91074 Herzogenaurach (DE)
(72) Erfinder: Baßler, Manuel, 77855 Achern (DE)

(56) Entgegenhaltungen:
- EP-A2- 0 267 033
- EP-A2- 2 896 539
- WO-A1-02/04830
- DE-A1-102007 003 479
- DE-A1-102008 061 569
- DE-B- 1 285 817
- FR-A1- 2 848 518
- GB-A- 516 037

## Beschreibung

Die Erfindung betrifft eine Pedalkrafterzeugungsvorrichtung für Simulatoren, in welchen ein Kupplungspedal zum Einsatz kommt.

Kupplungen in Kraftfahrzeugen werden mit einem Kupplungspedal durch den Fahrer betätigt. Dabei muss der Fahrer mit dem Fuß das Pedal entgegen der Rückstellkraft der Elastizitäten und Federkräfte im Betätigungssystem und in der Kupplung betätigen. Die Betätigungskraft hat dabei einen typischen vom Fahrer erwarteten Kraftverlauf. Wird die Kupplung elektronisch gesteuert betätigt, wobei ein Aktuator die Betätigung der Kupplung übernimmt, kann dennoch ein Pedal für den Fahrer vorgesehen sein, um dem Fahrer die Steuerung der Betätigung der Kupplung zu überlassen, obwohl keine direkte mechanische Verbindung oder Druckmittelverbindung zwischen dem Pedal und der Kupplung mehr vorliegt. Damit der Fahrer aber die für die tatsächliche Kupplungsbetätigung resultierende Rückstellkraft spürt, sind Pedalkrafterzeugungsvorrichtungen bekannt geworden, die eine Pedalkraft als Kupplungsrückstellkraft simulieren.

In der DE 43 27 881 C1 ist eine hydraulische Kupplungsbetätigungsvorrichtung bekannt geworden, bei welcher eine Pedalbetätigung der Kupplung durchgeführt werden kann. Da aber auch ein Elektromotor als Antriebsmotor vorgesehen ist, wird in diesen Betriebsarten die Betätigung der Kupplung mittels des Pedals ausgeschaltet und die Pedalbetätigung wird auf einen Ersatzspeicher umgeschaltet.

Auch sind Pedalkrafterzeugungsvorrichtungen bekannt geworden, welche die tatsächliche Pedalkraft modulieren, um die resultierende Pedalkraft an die Erwartungen des Fahrers besser anzupassen. Solche Pedalkrafterzeugungsvorrichtungen sind beispielsweise durch die DE 103 60 784 A1 oder die DE 10 2008 061 569 A1 bekannt geworden. Dadurch sind Rampenanordnungen bekannt geworden, die mittels Rollen beaufschlagt werden, um eine gewünschte Pedalkraft zu erhalten. Solche Vorrichtungen sind jedoch sehr kompliziert im Aufbau und unterliegen starkem Verschleiß wegen der ständig auftretenden Reibung. Dadurch ist die Lebensdauer dieser Vorrichtungen nicht genügend.

Aus der nachveröffentlichten EP2896539A2 ist ein System zur Pedalkraftsimulation bekannt, wobei das Pedal mit einer Pedalkraft betätigbar ist und mit einem in einem Gehäuse entgegen einer Rückstellkraft einer Rückstellfeder axial verschiebbaren Kolben wirkverbunden ist und die Stellung des Pedals über einen Sensor erfassbar und an die die Kupplung betätigende Aktorik weiterleitbar ist. Der Kolben ist dabei wenigstens mit einem weiteren federnden Element wirkverbunden, welches mit ansteigendem und abfallendem Kraftverlauf eine Hysterese bereitstellt.

Es ist die Aufgabe der Erfindung, eine Pedalkrafterzeugungsvorrichtung zu schaffen, welche einfach und klein aufgebaut ist und dennoch eine realistische Gegenkraft für ein zu betätigendes Pedal erzeugt.

Die Aufgabe der Erfindung wird mit den Merkmalen von Anspruch 1 gelöst.

Ein Ausführungsbeispiel der Erfindung betrifft eine Pedalkrafterzeugungsvorrichtung mit einem in einem Gehäuse verlagerbar angeordneten Kolben, wobei der Kolben im Gehäuse zwischen einer ersten Endstellung und einer zweiten Endstellung verlagerbar ist, wobei in dem Gehäuse ein erster Kraftspeicher angeordnet ist, wobei der Kolben entgegen der Rückstellkraft des ersten Kraftspeichers verlagerbar ist, und wobei auf den Kolben zumindest ein weiterer zweiter Kraftspeicher einwirkt, welcher seine Kraftwirkung auf den Kolben zwischen der ersten Endstellung und der zweiten Endstellung wechselt. Dadurch wird erreicht, dass der Kolben über den gesamten Betätigungsweg entgegen der Rückstellkraft des ersten Kraftspeichers verlagerbar ist, wobei über einen Teil des Betätigungswegs der zumindest eine zweite Kraftspeicher die Kraftwirkung auf den Kolben erhöht und über einen weiteren Teil des Betätigungswegs die Kraftwirkung auf den Kolben reduziert. Dadurch wird eine Modulation der Betätigungskraft erreicht, die der gewünschten Betätigungskraft entspricht. Dabei ist der zumindest eine zweite Kraftspeicher verschwenkbar im Gehäuse angeordnet ist, wobei der zweite Kraftspeicher an seinem ersten Ende am Gehäuse abgestützt ist und an seinem zweiten Ende am Kolben abgestützt ist. Dadurch kann eine Federkennlinie erzeugt werden, die ihr Vorzeichen wechselt, weil der Kraftspeicher verschwenken kann.

Bei einem Ausführungsbeispiel ist es vorteilhaft, wenn der erste Kraftspeicher koaxial zum Kolben angeordnet ist und der Kolben sich an einem ersten Ende des ersten Kraftspeichers abstützt, wobei sich der erste Kraftspeicher an seinem zweiten Ende am Gehäuse abstützt. So wird eine Anordnung des ersten Kraftspeichers erreicht, der koaxial zum Kolben angeordnet ist, was platzsparend ist und eine im Wesentlichen lineare Kennlinie bewirkt.

Auch ist es zweckmäßig, wenn zwei zweite Kraftspeicher angeordnet sind, die sich bezüglich der Verschiebeachse des Kolbens gegenüber liegen. Dadurch kann die Federkraft des bzw. der zweiten Kraftspeicher verstärkt werden.

Erfindungsgemäß ist es vorteilhaft, wenn vier zweite Kraftspeicher angeordnet sind, wobei sich zwei mal jeweils zwei zweite Kraftspeicher bezüglich der Verschiebeachse des Kolbens gegenüber liegen.

Dazu ist es vorteilhaft, wenn die vier zweite Kraftspeicher im Gehäuse angeordnet sind, die in Blickrichtung der Verschiebeachse des Kolbens betrachtet kreuzförmig angeordnet sind.

Besonders vorteilhaft ist es, wenn die zweiten Kraftspeicher an ihren Endbereichen Gelenkschuhe aufweisen, mittels welchen sie am Gehäuse und am Kolben gelenkig gelagert sind. Dadurch ist der Verschleiß aufgrund der Verschwenkung reduziert bzw. minimiert.

Erfindungsgemäß ist es vorteilhaft, wenn die Gelenkschuhe in Ausnehmungen der zweiten Kraftspeicher eingreifen. Dadurch kann der Gelenkschuh sicher an dem Kraftspeicher befestigt werden.

Auch ist es vorteilhaft, wenn der erste Kraftspeicher sich an dem Kolben über einen Abstützteller abstützt. Dadurch kann die Abstützung einfach auf den Durchmesser des Kraftspeichers angepasst werden, auch wenn der Kolben einen unterschiedlichen Durchmesser aufweist.

Zur Betätigung des Kolbens ist es zweckmäßig, wenn der Kolben mit einer Kolbenstange verbindbar ist, welche in das Gehäuse hinein ragt.

Die vorliegende Erfindung wird nachfolgend anhand bevorzugter Ausführungsbeispiele in Verbindung mit den zugehörigen Figuren näher erläutert:

Dabei zeigen:
- Figur 1: eine schematische perspektivische Ansicht einer Pedalkrafterzeugungsvorrichtung,
- Figur 2: eine schematische Ansicht einer Pedalkrafterzeugungsvorrichtung in einem unbetätigten Zustand,
- Figur 3: eine schematische Ansicht der Pedalkrafterzeugungsvorrichtung in einem einem teilbetätigten Zustand, und
- Figur 4: eine schematische Ansicht der Pedalkrafterzeugungsvorrichtung in einem im Wesentlichen vollständig betätigten Zustand.

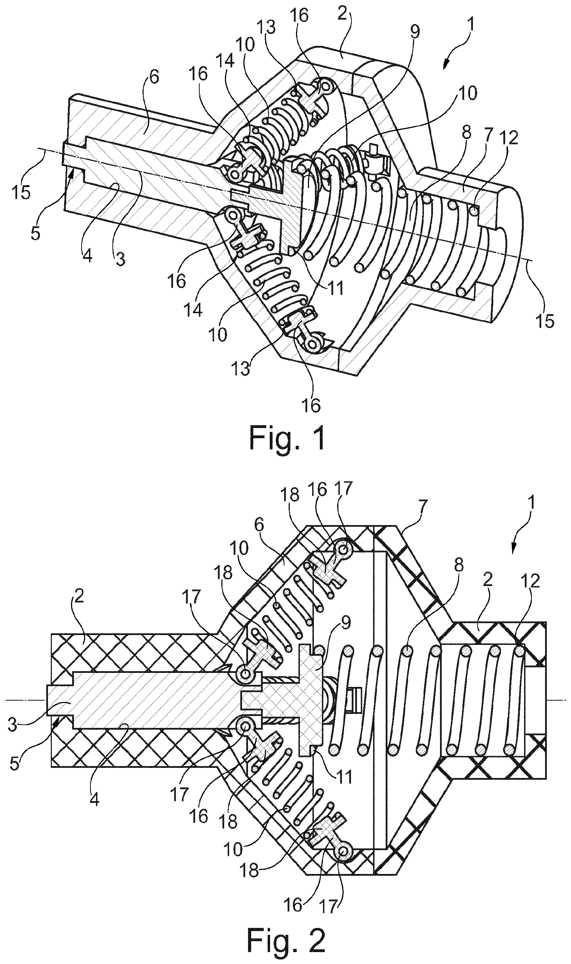

Die Figuren 1 bis 4 zeigen eine erfindungsgemäße Pedalkrafterzeugungsvorrichtung 1, wobei die Figur 1 die Pedalkrafterzeugungsvorrichtung in einer perspektivischen Ansicht in einem unbetätigten Zustand zeigt. Die Figuren 2 bis 4 zeigen die Pedalkrafterzeugungsvorrichtung 1 in einem unbetätigten Zustand, in einem teilbetätigten Zustand bzw. in einem im Wesentlichen vollständig betätigten Zustand.

Die Pedalbetätigungsvorrichtung 1 weist ein Gehäuse 2 auf, in welchem ein Kolben 3 längsverschieblich aufgenommen ist. Der Kolben 3 kann dabei in einem Kanal 4 des Gehäuses 2 axial verschieblich verlagert werden, wobei das Gehäuse an einem Ende des Kolbens eine Öffnung 5 aufweist, durch welche eine Kolbenstange in das Gehäuse 2 eingreifen kann und den Kolben 3 beaufschlagen und verlagern kann.

Das Gehäuse 2 ist vorteilhaft aus zumindest zwei Gehäuseelementen 6, 7 aufgebaut, die miteinander verbunden sind. Jedes Gehäuseteil ist dabei mit einem zylindrischen Teil und einem sich etwa trichterförmig erweiternden Teil ausgebildet, wobei sich die Gehäuseteile 6, 7 am trichterförmig erweiternden Teil berühren und miteinander verbunden sind.

Im Gehäuse 2 ist ein erster Kraftspeicher 8 angeordnet, welcher sich an dem Gehäuse 2 im Bereich des Gehäuseteils 7 und dort im zylindrischen Bereich an einem seiner Enden axial abstützt. Das andere Ende des Kraftspeichers 8 stützt sich an einem Abstützteller 9 ab, welcher mit dem Kolben 3 verbunden ist. Dazu weist der Abstützteller einen Hals auf, welcher in eine Aufnahme des Kolbens 3 eingreift. Der Abstützteller 9 weist einen ringförmigen Rand auf, der gegenüber der zentralen Fläche zurück versetzt ist. Dadurch kann die zentrale Fläche in eine Öffnung der Windungen des ersten Kraftspeichers eingreifen und den Kraftspeicher zentrieren. Der erste Kraftspeicher 8 ist koaxial zum Kolben 3 angeordnet und der Kolben 3 stützt sich an einem ersten Ende 11 des ersten Kraftspeichers 8 ab, wobei sich der erste Kraftspeicher 8 an seinem zweiten Ende 12 am Gehäuse 2 abstützt.

Im Gehäuse sind weiterhin zweite Kraftspeicher 10 angeordnet, welche sich an einem ihrer Enden am Gehäuse 2 abstützen und an ihrem anderen Ende an dem Kolben 3 abstützen. In den Figuren sind jeweils nur Teile der zweiten Kraftspeicher zu erkennen. Erfindungsgemäß ist vorteilhaft ein zweiter Kraftspeicher 10 oder es sind zumindest zwei zweite Kraftspeicher 10 verschwenkbar im Gehäuse 2 angeordnet, wobei der zumindest eine zweite Kraftspeicher 10 sich an seinem ersten Ende 13 am Gehäuse abstützt und an seinem zweiten Ende 14 sich am Kolben abstützt. Bevorzugt sind zwei zweite Kraftspeicher 10 angeordnet, die sich bezüglich der Verschiebeachse 15 des Kolbens 3 gegenüber liegen. Bei einem weiteren Ausführungsbeispiel sind vier zweite Kraftspeicher 10 angeordnet sind, wobei sich zwei mal jeweils zwei zweite Kraftspeicher 10 bezüglich der Verschiebeachse 15 des Kolbens 3 gegenüber liegen. Dabei sind die vier zweiten Kraftspeicher 10 im Gehäuse 2 derart angeordnet, dass sie in Blickrichtung der Verschiebeachse 15 des Kolbens 3 betrachtet kreuzförmig angeordnet sind. Die Anordnung muss jedoch nicht kreuzförmig sein, sondern kann auch anderweitig gewählt werden. Es kann auch eine ungerade Zahl zusätzlicher Kraftspeicher vorhanden sein, die zum Beispiel sternförmig angeordnet sind. Günstig ist dabei, wenn der Kolben 3 nicht auf eine bestimmte Seite gedrückt wird, was jedoch am einfachsten durch eine gegenüberliegende Anordnung der zusätzlichen Kraftspeicher erreicht wird.

Die zweiten Kraftspeicher 10 weisen an ihren Endbereichen 13, 14 Gelenkschuhe 16 auf, mittels welchen sie am Gehäuse 2 und am Kolben 3 gelenkig gelagert sind. Dazu weisen die Gelenkschuhe Gelenkelemente 17 und Halteteller 18 auf. Die Gelenkelemente dienen der gelenkigen Aufnahme und Halterung der Gelenkschuhe 16 am Gehäuse 2 und die Halteteller 18 dienen der Verbindung mit dem Kraftspeicher. Dazu greifen die Gelenkschuhe mit ihren Haltetellern 18 in Ausnehmungen der zweiten Kraftspeicher 10 ein.

In Figur 1 und in Figur 2 ist ein Zustand gezeigt, in welchem der Kolben 3 in einer unbetätigten Stellung ist. Die Kraftspeicher sind dabei bevorzugt mit Vorspannung an dem Kolben abgestützt und verspannen ihn in die unbetätigte Ausgangsstellung. Bei einer beginnenden Betätigung wird der Kolben nach rechts verlagert und wird entgegen der Rückstellkraft der Kraftspeicher 8, 10 verlagert. Die Kennlinie des Kraftspeichers ist dabei üblicher Weise linear, wobei die Kennlinie der Kraftspeicher aufgrund der Verschwenkung der Kraftspeicher moduliert ist. Im Falle des vorliegenden Ausführungsbeispiels nimmt die Rückstellkraft der zweiten Kraftspeicher auf den Kolben mit der Kolbenverlagerung ab.

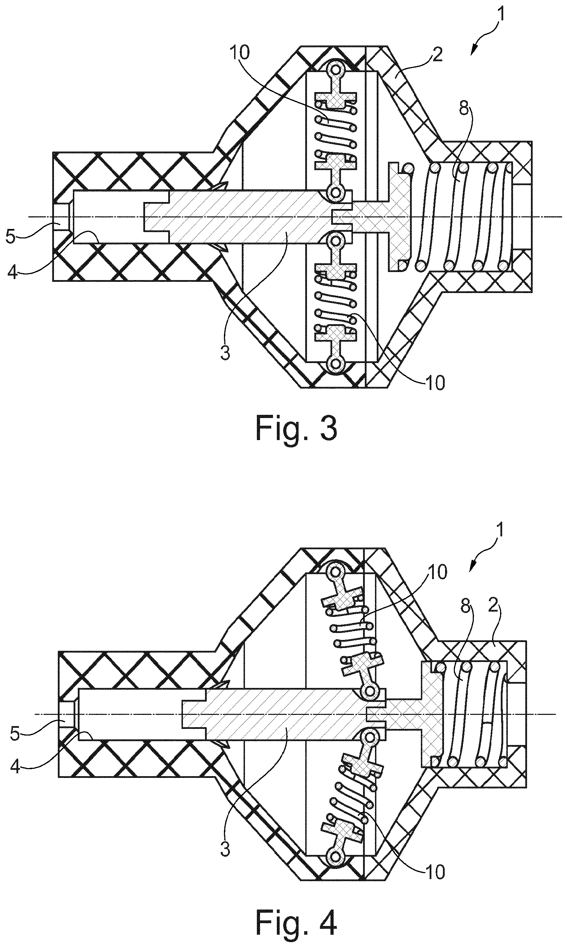

In Figur 3 ist die Stellung des Kolbens gezeigt, in welchem die Rückstellkraft der zweiten Kraftspeicher 10 null ist. Bei einer weiteren Verlagerung des Kolbens beispielsweise gemäß Figur 4 wandelt die Rückstellkraft der zweiten Kraftspeicher ihr Vorzeichen und die zweiten Kraftspeicher unterstützen die weitere Verlagerung des Kolbens 3. Die Figur 2 zeigt die eine Endstellung des Kolbens 3 und die Figur 4 zeigt die zweite Endstellung des Kolbens 3 im Gehäuse 2, wobei der Kolben zwischen diesen beiden Endstellungen verlagerbar ist.

### Bezugszeichenliste

- 1: Pedalkrafterzeugungsvorrichtung
- 2: Gehäuse
- 3: Kolben
- 4: Kanal
- 5: Öffnung
- 6: Gehäuseelement
- 7: Gehäuseelement
- 8: erster Kraftspeicher
- 9: Abstützteller
- 10: zweiter Kraftspeicher
- 11: Ende
- 12: Ende
- 13: Ende
- 14: Ende
- 15: Verschiebeachse
- 16: Gelenkschuh
- 17: Gelenkelement
- 18: Halteteller

## Patentansprüche

1. Pedalkrafterzeugungsvorrichtung (1) für Simulatoren, in denen ein Kupplungspedal zum Einsatz kommt, mit einem in einem Gehäuse (2) verlagerbar angeordneten Kolben (3), wobei der Kolben (3) im Gehäuse (2) zwischen einer ersten Endstellung und einer zweiten Endstellung verlagerbar ist, wobei in dem Gehäuse (2) ein erster Kraftspeicher (8) angeordnet ist, wobei der Kolben entgegen der Rückstellkraft des ersten Kraftspeichers (8) verlagerbar ist, **dadurch gekennzeichnet, dass** auf den Kolben (3) zumindest ein weiterer zweiter Kraftspeicher (10) einwirkt, welcher seine Kraftwirkung auf den Kolben (3) zwischen der ersten Endstellung und der zweiten Endstellung wechselt, und dass der zumindest eine zweite Kraftspeicher (10) verschwenkbar im Gehäuse (2) angeordnet ist, wobei der zweite Kraftspeicher (10) an seinem ersten Ende (13) am Gehäuse abgestützt ist und an seinem zweiten Ende (14) am Kolben (3) abgestützt ist.

2. Pedalkrafterzeugungsvorrichtung nach Anspruch 1, **dadurch gekennzeichnet, dass** der erste Kraftspeicher (8) koaxial zum Kolben (3) angeordnet ist und der Kolben (3) sich an einem ersten Ende (11) des ersten Kraftspeichers (8) abstützt, wobei sich der erste Kraftspeicher (8) an seinem zweiten Ende (12) am Gehäuse abstützt.

3. Pedalkrafterzeugungsvorrichtung nach einem der vorhergehenden Ansprüche, **dadurch gekennzeichnet, dass** zwei oder mehr zweite Kraftspeicher (10) angeordnet sind, die sich bezüglich der Verschiebeachse (15) des Kolbens (3) gegenüber liegen.

4. Pedalkrafterzeugungsvorrichtung nach einem der vorhergehenden Ansprüche, **dadurch gekennzeichnet, dass** vier zweite Kraftspeicher (10) angeordnet sind, wobei sich zwei mal jeweils zwei zweite Kraftspeicher (10) bezüglich der Verschiebeachse (15) des Kolbens (3) gegenüber liegen.

5. Pedalkrafterzeugungsvorrichtung nach einem der vorhergehenden Ansprüche, **dadurch gekennzeichnet, dass** die vier zweite Kraftspeicher (10) im Gehäuse (2) angeordnet sind, die in Blickrichtung der Verschiebeachse (15) des Kolbens (3) betrachtet kreuzförmig angeordnet sind.

6. Pedalkrafterzeugungsvorrichtung nach einem der vorhergehenden Ansprüche, **dadurch gekennzeichnet, dass** die zweiten Kraftspeicher (10) an ihren Endbereichen (13,14) Gelenkschuhe (16) aufweisen, mittels welchen sie am Gehäuse (2) und am Kolben (3) gelenkig gelagert sind.

7. Pedalkrafterzeugungsvorrichtung nach einem der vorhergehenden Ansprüche, **dadurch gekennzeichnet, dass** die Gelenkschuhe (16) in Ausnehmungen der zweiten Kraftspeicher eingreifen.

8. Pedalkrafterzeugungsvorrichtung nach einem der vorhergehenden Ansprüche, **dadurch gekennzeichnet, dass** der erste Kraftspeicher (8) sich an dem Kolben über einen Abstützteller (9) abstützt.

9. Pedalkrafterzeugungsvorrichtung nach einem der vorhergehenden Ansprüche, **dadurch gekennzeichnet, dass** der Kolben (3) mit einer Kolbenstange verbindbar ist, welche in das Gehäuse (2) hinein ragt.

## Claims

1. A pedal force creation device (1) for simulators in which a clutch pedal is used, having a piston (3) displaceably arranged in a housing (2), wherein the piston (3) can be displaced in the housing (2) between a first end position and a second end position, wherein a first force accumulator (8) is arranged in the housing (2), wherein the piston is capable of being displaced against the return force of the first force accumulator (8), **characterised in that** at least one further second force accumulator (10) acts on the piston (3) and changes the force that it exerts on the piston (3) between the first end position and the second end position, and **in that** the at least one second force accumulator (10) is pivotably arranged in the housing (2), wherein the second force accumulator (10) is supported at its first end (13) on the housing and supported at its second end (14) on the piston (3).

2. The pedal force creation device according to claim 1, **characterised in that** the first force accumulator (8) is arranged coaxially to the piston (3) and the piston (3) is supported on a first end (11) of the first force accumulator (8), wherein the first force accumulator (8) is supported at its second end (12) on the housing.

3. The pedal force creation device according to one of the preceding claims, **characterised in that** two or more second force accumulators (10) are arranged, which are opposite each other with respect to the movement axis (15) of the piston (3).

4. The pedal force creation device according to one of the preceding claims, **characterised in that** four second force accumulators (10) are arranged, wherein two times two second power accumulators (10) are arranged opposite each other with respect to the movement axis (15) of the piston (3).

5. The pedal force creation device according to one of the preceding claims, **characterised in that** the four second force accumulators (10) are arranged in the housing (2), which viewed in the direction of the movement axis (15) of the piston (3) are arranged in a cross shape.

6. The pedal force creation device according to one of the preceding claims, **characterised in that** the second force accumulators (10) have articulated shoes (16) at their end regions (13, 14), by means of which they are hinge-mounted on the housing (2) and on the piston (3).

7. The pedal force creation device according to one of the preceding claims, **characterised in that** the articulated shoes (16) engage in recesses of the second force accumulators.

8. The pedal force creation device according to one of the preceding claims, **characterised in that** the first force accumulator (8) is supported on the piston via a support plate (9).

9. The pedal force creation device according to one of the preceding claims, **characterised in that** the piston (3) can be connected to a piston rod that protrudes into the housing (2).

## Revendications

1. Dispositif de génération de force de pédalage (1) pour des simulateurs dans lesquels une pédale d'embrayage est utilisée, avec un piston (3) disposé de manière mobile dans un boîtier (2), ledit piston (3) pouvant se déplacer dans le boîtier (2) entre une première fin de course et une seconde fin de course, un premier accumulateur de force (8) étant disposé dans le boîtier (2), le piston pouvant se déplacer à l'encontre de la force de rappel du premier accumulateur de force (8), **caractérisé en ce qu'**au moins un second accumulateur de force (10) supplémentaire agit sur le piston (3), lequel alterne son action de force sur le piston (3) entre la première fin de course et la seconde fin de course et **en ce que** le au moins second accumulateur de force (10) est disposé de manière pivotante dans le boîtier (2), le second accumulateur de force (10) s'appuyant par sa première extrémité (13) sur le boîtier et s'appuyant par sa seconde extrémité (14) sur le piston (3).

2. Dispositif de génération de force de pédalage selon la revendication 1, **caractérisé en ce que** le premier accumulateur de force (8) est disposé de manière coaxiale par rapport au piston (3) et **en ce que** le piston (3) s'appuie sur une première extrémité (11) du premier accumulateur de force (8), le premier accumulateur de force (8) s'appuyant sur le boîtier par sa seconde extrémité (12).

3. Dispositif de génération de force de pédalage selon l'une quelconque des revendications précédentes, **caractérisé en ce que** deux ou plusieurs seconds accumulateurs de force (10) sont disposés face à face par rapport à l'axe de déplacement (15) du piston (3).

4. Dispositif de génération de force de pédalage selon l'une quelconque des revendications précédentes, **caractérisé en ce que** quatre seconds accumulateurs de force (10) sont disposés, deux seconds accumulateurs de force (10) étant disposés respectivement face à face par deux par rapport à l'axe de déplacement (15) du piston (3).

5. Dispositif de génération de force de pédalage selon l'une quelconque des revendications précédentes, **caractérisé en ce que** les quatre seconds accumulateurs de force (10) sont disposés dans le boîtier (2) et sont disposés en croix vus dans la direction de l'axe de déplacement (15) du piston (3).

6. Dispositif de génération de force de pédalage selon l'une quelconque des revendications précédentes, **caractérisé en ce que** les seconds accumulateurs de force (10) présentent à leurs zones d'extrémité (13, 14) des patins d'articulation (16) au moyen desquels ils sont montés de manière articulée sur le boîtier (2) et sur le piston (3).

7. Dispositif de génération de force de pédalage selon l'une quelconque des revendications précédentes, **caractérisé en ce que** les patins articulés (16) s'engagent dans des évidements des seconds accumulateurs de force.

8. Dispositif de génération de force de pédalage selon l'une quelconque des revendications précédentes, **caractérisé en ce que** le premier accumulateur de force (8) s'appuie sur le piston par l'intermédiaire d'un plateau d'appui (9).

9. Dispositif de génération de force de pédalage selon l'une quelconque des revendications précédentes, **caractérisé en ce que** le piston (3) peut être relié à une tige de piston qui fait saillie dans le boîtier (2).
